(19) Europäisches Patentamt / European Patent Office / Office européen des brevets

(11) **EP 4 657 185 A1**

(12) **DEMANDE DE BREVET EUROPEEN**

(43) Date de publication:
**03.12.2025 Bulletin 2025/49**

(21) Numéro de dépôt: **25178730.5**

(22) Date de dépôt: **26.05.2025**

(51) Classification Internationale des Brevets (IPC):
**G05B 19/05** (2006.01)  **B64C 1/14** (2006.01)

(52) Classification Coopérative des Brevets (CPC):
**G05B 19/058; B64C 1/1407;** B64D 2045/0085

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **29.05.2024 FR 2405545**

(71) Demandeur: **AIRBUS OPERATIONS (S.A.S.)**
**31060 Toulouse (FR)**

(72) Inventeurs:
• **DESSERTENNE, Franck**
**31060 TOULOUSE (FR)**
• **LOUIS, Tony**
**31060 TOULOUSE (FR)**

(74) Mandataire: **Cabinet Le Guen Maillet**
**3, impasse de la Vigie**
**CS 71840**
**35418 Saint-Malo Cedex (FR)**

(54) **PROCÉDÉ ET SYSTÈME DE SURVEILLANCE DE LA PERFORMANCE D'UN SYSTÈME DE CONTROLE DE FERMETURE D'UNE PORTE D'UN AERONEF**

(57)      Il est proposé un procédé de surveillance d'une performance d'un système de contrôle de fermeture d'une porte d'un aéronef, la porte étant équipée d'une pluralité de capteurs de proximité mesurant des valeurs de distance (à partir desquelles sont obtenues des valeurs logiques utilisées pour contrôler l'état de fermeture de la porte en fonction d'une combinaison logique des valeurs logiques avec des opérateurs logiques). Le procédé comporte : obtenir (801) les valeurs de distance ; calculer (803) une valeur d'un indicateur de performance du système de contrôle de fermeture de la porte, en fonction d'une combinaison de fonctions mathématiques recevant les valeurs de distance et qui est une transposition de la combinaison logique dans laquelle chaque type d'opérateur logique est remplacé par une fonction mathématique particulière ; et déclencher (805, 807) une alerte si une condition (804, 806), fonction de la valeur de l'indicateur, est vérifiée.

[Fig. 8]

**Description**

DOMAINE TECHNIQUE

Le domaine de l'invention est celui de la surveillance de l'état de santé (« Health Monitoring » en anglais) et de la maintenance des aéronefs.

Plus précisément, la présente invention concerne un procédé de surveillance de la performance d'un système de contrôle de fermeture d'une porte d'un aéronef.

La présente invention concerne également un système de surveillance adapté à la mise en œuvre d'un tel procédé, un aéronef comprenant un tel système, ainsi qu'un produit programme d'ordinateur et un support de stockage permettant la mise en œuvre d'un tel procédé.

ETAT DE LA TECHNIQUE ANTERIEURE

Les aéronefs sont soumis à des conditions extrêmes lorsqu'ils naviguent dans les airs, notamment en termes de variations de température, de pression et de vitesse. Les performances de leurs composants doivent être régulièrement vérifiées afin d'assurer leur bon fonctionnement.

La maintenance préventive ou prédictive consiste à effectuer des contrôles et des réparations avant qu'une panne ne se manifeste.

Dans le domaine de l'aéronautique, la maintenance permet notamment d'améliorer la disponibilité et la performance d'un aéronef en évitant son immobilisation au sol (AOG, pour « Aircraft On Ground » en anglais), et de réduire les coûts de maintenance en permettant d'identifier à l'avance des opérations de maintenance en fonction des performances réelles de l'aéronef.

La surveillance de l'état de santé de l'aéronef à des fins de maintenance comprend une collecte des données techniques dès la mise sous tension de l'aéronef, puis pendant le vol et jusqu'à son arrêt. Les données ainsi collectées sont notamment utilisées pour calculer les différents indicateurs sur lesquels s'appuie la maintenance, et donc la programmation d'opérations de maintenance.

L'utilisation des données peut avoir lieu pendant le vol (on parle alors de surveillance de la santé au cours du vol, ou « In-flight health monitoring » en anglais) et/ou après le vol (par exemple si le volume de données à traiter nécessite des ressources de calcul plus élevées).

Par ailleurs, les calculs utilisant les données collectées peuvent être effectués dans l'aéronef et/ou dans un ou plusieurs équipements au sol. Dans le second cas, les équipements (calculateurs) au sol reçoivent, en temps réel ou en différé, les données collectées dans l'aéronef.

L'observation de l'état de santé d'un aéronef sur plusieurs vols permet au personnel au sol de prendre des décisions et de planifier les opérations de maintenance à l'avance, ce qui permet de gagner de précieux temps d'exécution. Le personnel au sol peut ainsi prendre des décisions appropriées en fonction de la criticité, de la logistique et des contrôles de maintenance à venir, et préparer à l'avance les réparations et les remplacements.

Dans le cadre de cette maintenance, il existe en particulier un besoin d'effectuer une surveillance de la performance d'un système de contrôle de fermeture des portes des aéronefs. Pour cela, il convient de disposer d'un indicateur de performance du système de contrôle de fermeture d'une porte d'un aéronef, qui soit fiable et simple à calculer, et qui permette d'anticiper d'éventuelles interruptions de fonctionnement (« Operational Interrupts ») en levant des alertes de maintenance suffisamment à l'avance.

EXPOSE DE L'INVENTION

Il est proposé ici un procédé de surveillance d'une performance d'un système de contrôle de fermeture d'une porte d'un aéronef, la porte étant équipée d'une pluralité de capteurs de proximité mesurant des valeurs de distance à partir desquelles sont obtenues des valeurs logiques utilisées pour contrôler l'état de fermeture de la porte en fonction d'une combinaison logique des valeurs logiques avec des opérateurs logiques, le procédé étant implémenté par un système de surveillance de la performance du système de contrôle de fermeture de la porte sous forme de circuiterie électronique, le procédé comportant :

- obtenir les valeurs de distance mesurées par la pluralité de capteurs de proximité ;

- calculer une valeur d'un indicateur de performance du système de contrôle de fermeture de la porte, en fonction d'une combinaison de fonctions mathématiques qui utilise les valeurs de distance comme valeurs d'entrée et qui est une transposition de la combinaison logique dans laquelle chaque type d'opérateur logique de la combinaison logique est remplacé par une fonction mathématique particulière ; et

- déclencher une alerte si une condition de déclenchement, fonction de la valeur de l'indicateur de performance du système de contrôle de fermeture de la porte, est vérifiée.

Ainsi, il est possible d'effectuer une surveillance de la dégradation d'une porte d'un aéronef, grâce à un indicateur de dégradation de la porte qui est fiable et simple à calculer.

Selon un mode de réalisation particulier, la transposition de la combinaison logique est telle que :

- l'opérateur logique ET, appliqué à deux valeurs logiques notées A et B et fournies par deux capteurs donnés, est remplacé par la fonction mathématique MAX(A',B'), avec A' et B' des valeurs de distance mesurées par les deux capteurs donnés ; et

- l'opérateur logique OU, appliqué à deux valeurs logiques notées A et B et fournies par deux capteurs donnés, est remplacé par une fonction mathématique T(A',B') avec A' et B' des valeurs de distance mesurées par les deux capteurs donnés, appartenant au groupe comprenant :

- T(A',B') = K.MOYENNE(A',B'), avec K >= 1 ; et

- T(A',B') = K.MIN(A',B'), avec K>=1.

Selon un mode de réalisation particulier, la transposition de la combinaison logique est telle qu'un opérateur logique « >= 2 » fournissant en sortie la valeur « 1 » si au moins deux valeurs logiques en entrée possèdent la valeur « 1 », appliqué à trois valeurs logiques notées A, B et C et fournies par trois capteurs donnés, est remplacé par la fonction mathématique suivante : « MAX [T(A',B'), T(B',C'), T(A',C')] », avec A', B' et C' des valeurs de distance mesurées par les trois capteurs donnés.

Selon un mode de réalisation particulier, le procédé comprend une normalisation et un écrêtage des valeurs de distance afin d'obtenir des valeurs de distance normalisées et écrêtées, et dans lequel le calcul d'une valeur de l'indicateur de performance du système de contrôle de fermeture de la porte est effectué avec les valeurs de distance normalisées et écrêtées.

Selon un mode de réalisation particulier, la normalisation et l'écrêtage des valeurs de distance comprend :

- une affectation de valeur telle que si une valeur de distance, notée « gap » :

    * est supérieure ou égale à une première valeur prédéterminée R1, la valeur de distance normalisée et écrêtée, notée « norm_gap » s'écrit : norm_gap = gap ;

    * est inférieure à la première valeur de référence R1, la valeur de distance normalisée et écrêtée, notée « norm_gap » s'écrit : norm_gap = gap / G_MAX, avec G_MAX une valeur maximale d'une plage de valeurs de distance prédéterminée pour le capteur de proximité ayant fourni la valeur de distance « gap » ;

- si après l'affectation la valeur de distance normalisée et écrêtée « norm_gap » est supérieure à 1 et inférieure à la première valeur prédéterminée R1, la valeur de distance normalisée et écrêtée « norm_gap » est modifiée pour prendre une deuxième valeur prédéterminée R2 telle que : 1 < R2 < R1.

Selon un mode de réalisation particulier, l'alerte appartient au groupe comprenant :

- une première alerte, indiquant un premier niveau de gravité, si la valeur de l'indicateur de performance du système de contrôle de fermeture de la porte est égale à une première valeur prédéterminée V1 pendant une première fenêtre temporelle ; et

- une deuxième alerte, indiquant un deuxième niveau de gravité inférieur au premier niveau de gravité, si la valeur de l'indicateur de performance du système de contrôle de fermeture de la porte est comprise dans une plage de valeurs [V2, V1[ pendant une deuxième fenêtre temporelle, avec V2 une deuxième valeur prédéterminée inférieure à la première valeur V1.

Il est aussi proposé un produit programme d'ordinateur, comportant des instructions entraînant l'exécution, par un processeur, du procédé évoqué ci-dessus selon l'un quelconque de ses modes de réalisation, lorsque lesdites instructions sont exécutées par le processeur.

Il est aussi proposé un support de stockage, stockant de telles instructions.

Il est aussi proposé un système de surveillance d'une performance d'un système de contrôle de fermeture d'une porte d'un aéronef, la porte étant équipée d'une pluralité de capteurs de proximité mesurant des valeurs de distance à partir desquelles sont obtenues des valeurs logiques utilisées pour contrôler l'état de fermeture de la porte en fonction d'une combinaison logique des valeurs logiques avec des opérateurs logiques, le système de surveillance de la performance du système de contrôle de fermeture de la porte comprenant une circuiterie électronique configurée pour implémenter :

- obtenir les valeurs de distance mesurées par la pluralité de capteurs de proximité ;

- calculer une valeur d'un indicateur de performance du système de contrôle de fermeture de la porte, en fonction d'une combinaison de fonctions mathématiques qui utilise les valeurs de distance comme valeurs d'entrée et qui est une transposition de la combinaison logique dans laquelle chaque type d'opérateur logique de la combinaison logique est remplacé par une fonction mathématique particulière ; et

- déclencher une alerte si une condition de déclenchement, fonction de la valeur de l'indicateur de performance du système de contrôle de fermeture de la porte, est vérifiée.

Il est aussi proposé un aéronef comprenant au moins une porte et le système précité de surveillance d'une performance d'un système de contrôle de fermeture d'une porte (dans l'un quelconque de ses différents modes de réalisation).

BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :

[Fig. 1] illustre schématiquement, en vue de côté, un aéronef équipé d'un système de surveillance de la performance d'un système de contrôle de fermeture d'une (ou plusieurs) porte(s) d'un aéronef ;

[Fig. 2] illustre schématiquement un exemple d'architecture matérielle du système de surveillance de la performance d'un système de contrôle de fermeture d'une (ou plusieurs) porte(s) d'un aéronef ;

[Fig. 3] illustre schématiquement un exemple de combinaison logique de signaux pour contrôler l'état de fermeture d'un premier type de porte ;

[Fig. 4] illustre schématiquement un exemple de combinaison logique de signaux pour contrôler l'état de fermeture d'un deuxième type de porte ;

[Fig. 5] illustre schématiquement un exemple de combinaison logique de signaux pour contrôler l'état de fermeture d'un troisième type de porte ;

[Fig. 6] illustre schématiquement un exemple de combinaison logique de signaux pour contrôler l'état de fermeture d'un quatrième type de porte ;

[Fig. 7] illustre schématiquement le détail d'un bloc opérateur logique « >=2 » ; et

[Fig. 8] illustre schématiquement un exemple d'algorithme de surveillance de la performance d'un système de contrôle de fermeture d'une porte d'un aéronef.

EXPOSE DETAILLE DE MODES DE REALISATION

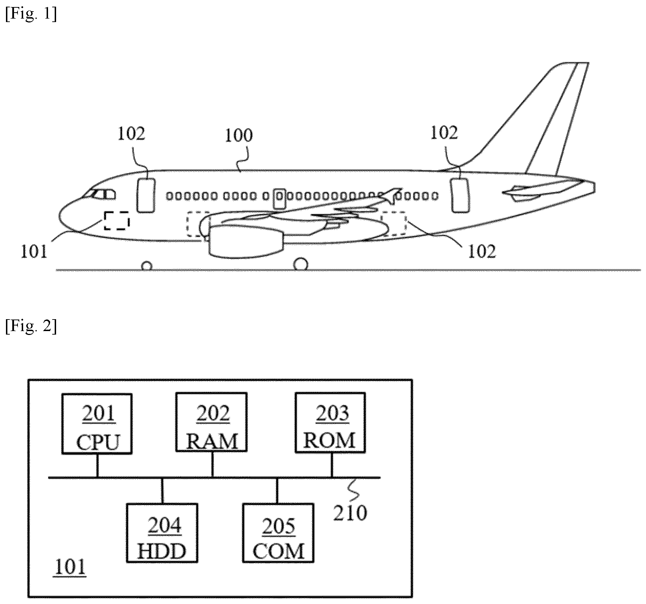

La **Fig. 1** illustre schématiquement, en vue de côté, un aéronef 100 équipé de portes 102 et d'un système 101 de surveillance de la performance d'un système de contrôle de fermeture de ces portes.

Dans un souci de simplification, seules quelques portes 102 sont représentées sur la Fig. 1. En général, un aéronef comporte de nombreuses portes, par exemple :

- des portes passagers (« PAX Doors » ou « Passenger Doors » en anglais) ;

- une porte avant de soute (« FWD Cargo Compartment Door » en anglais) ;
- une porte arrière de soute (« AFT Cargo Compartment Door » en anglais) ;
- une porte de chargement en vrac de la soute (« Bulk Cargo Compartment Door » en anglais) ; et
- une porte de compartiment avionique (« Avionic Compartment Door » en anglais).

Chaque porte est classiquement équipée d'une pluralité de capteurs de proximité mesurant des valeurs de distance. Typiquement, chaque capteur de proximité mesure une distance (aussi appelée « écart » ou « gap » en anglais) entre la pointe du capteur et un élément cible (« target » en anglais).

Par exemple, un capteur de proximité est installé sur une surface de la porte qui, quand la porte est en position fermée, vient en regard d'un élément cible qui lui est installé sur une surface de la structure de l'aéronef (fuselage) entourant la porte. Dans une variante, les positions du capteur de proximité et de l'élément cible sont inversées : l'élément cible est installé sur une surface de la porte et le capteur de proximité est installé sur une surface de la structure de l'aéronef entourant la porte. La position fermée de la porte peut ainsi être vérifiée grâce à la distance (gap) mesurée : par exemple, si la distance mesurée est inférieure ou égale à un seuil prédéterminé (cas d'une valeur mesurée dite « Proche » ou « Near » en anglais), on considère que le capteur de proximité fournit une valeur logique « 1 », qui correspond à un état « fermé », et si elle est supérieure au seuil (cas d'une valeur mesurée dite « Lointaine » ou « Far » en anglais), on considère que le capteur de proximité fournit une valeur logique « 0 », qui correspond à un état « ouvert ».

Les capteurs de proximité peuvent également être utilisés pour vérifier qu'un élément de blocage de la porte (« latch element » en anglais) est en position de blocage ou non, et/ou qu'un élément de verrouillage de la porte (« lock element » en anglais) est en position de verrouillage ou non.

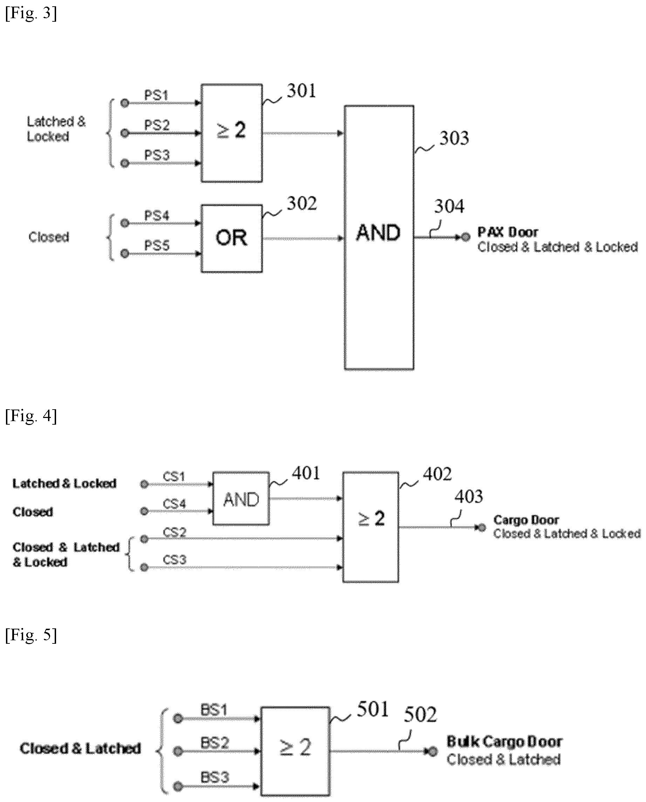

Le fait d'équiper chaque porte d'une pluralité de capteurs de proximité permet de disposer d'une pluralité de valeurs de distance, à partir desquelles sont obtenues une pluralité de valeurs logiques (« 1 » ou « 0 »). En combinant ces valeurs logiques avec des opérateurs logiques (par exemple les opérateurs « ET » et « OU »), selon une combinaison logique spécifique, il est possible de contrôler l'état de fermeture de la porte (voir Fig. 3 à 7). Par exemple, l'aéronef comprend, pour chaque porte passager, un calculateur dédié (par exemple de type LDC, pour « Local Door Control » en anglais) permettant de contrôler l'état de fermeture de la porte en vérifiant les trois paramètres suivants :

- porte ouverte ou fermée (« closed » ou « open » en anglais) ;
- porte bloquée ou débloquée (« latched » ou « unlatched » en anglais) ; et
- porte verrouillée ou déverrouillée (« locked » ou « unlocked » en anglais).

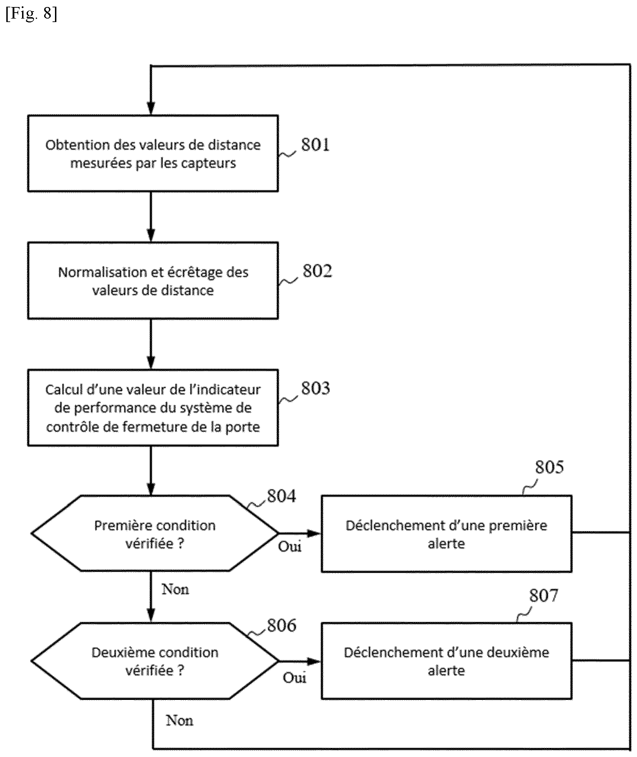

Comme détaillé par la suite (voir Fig. 8), le système 101 de surveillance de la performance du système de contrôle de fermeture des portes 102 permet quant à lui, pour chaque porte, de calculer une valeur d'un indicateur de performance du système de contrôle de fermeture de la porte (aussi appelé ci-après « indicateur DDI », pour « Door Degradation Indicator » en anglais) et de déclencher une alerte si une condition de déclenchement, fonction de la valeur de l'indicateur DDI, est vérifiée.

Le système 101 de surveillance de la performance du système de contrôle de fermeture des portes est un équipement électronique embarqué. Par exemple, il fait partie d'une circuiterie électronique de l'avionique de l'aéronef 100. Préférentiellement, il est intégré à un calculateur de l'aéronef 100.

Dans une variante, l'aéronef 100 comprend plusieurs systèmes 101 permettant chacun de surveiller la performance du système de contrôle de fermeture d'une ou plusieurs portes 102.

Dans une autre variante, le système 101 de surveillance de la performance du système de contrôle de fermeture d'une ou plusieurs portes n'est pas embarqué dans l'aéronef 100 mais est présent au sol.

Dans une autre variante, le système 101 de surveillance de la performance du système de contrôle de fermeture d'une ou plusieurs portes comprend une première partie qui est embarquée dans l'aéronef 100 et une deuxième partie qui est présente au sol. Ainsi, les calculs de l'indicateur DDI et le déclenchement des alertes peuvent être répartis entre les deux parties du système 101. Par exemple, la première partie calcule la valeur de l'indicateur DDI et la deuxième partie déclenche les alertes.

Dans une autre variante, au moins un système 101 de surveillance de la performance du système de contrôle de fermeture d'une ou plusieurs portes est embarqué dans l'aéronef et au moins un système 101 de surveillance de la performance du système de contrôle de fermeture d'une ou plusieurs autres portes est installé au sol.

La **Fig. 2** illustre schématiquement un exemple d'architecture matérielle du système 101 de surveillance de la performance du système de contrôle de fermeture d'une ou plusieurs portes 102, qui comprend alors, reliés par un bus de communication 210 : un processeur ou CPU (« Central Processing Unit » en anglais) 201 ; une mémoire vive RAM (« Random Access Memory » en anglais) 202 ; une mémoire morte ROM (« Read Only Memory » en anglais) 203, par exemple une mémoire Flash ; un dispositif de stockage de données, tel qu'un disque dur HDD (« Hard Disk Drive » en anglais), ou un lecteur de support de stockage, tel qu'un lecteur de cartes SD (« Secure Digital » en anglais) 204 ; au moins une interface de communication 205 permettant au système 101 de surveillance de la performance du système de contrôle de fermeture d'une ou plusieurs portes 102 d'interagir dans l'avionique de l'aéronef 100.

Le processeur 201 est capable d'exécuter des instructions chargées dans la RAM 202 à partir de la ROM 203, d'une mémoire externe (non représentée), d'un support de stockage, tel qu'une carte SD, ou d'un réseau de communication (non représenté). Lorsque le système 101 de surveillance de la performance du système de contrôle de fermeture d'une ou plusieurs portes 102 est mis sous tension, le processeur 201 est capable de lire de la RAM 202 des instructions et de les exécuter. Ces instructions forment un programme d'ordinateur causant la mise en œuvre, par le processeur 201, des comportements, étapes et algorithme décrits ici.

Tout ou partie des comportements, étapes et algorithme décrits ici peut ainsi être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant (« chip » en anglais) dédié ou un ensemble de composants (« chipset » en anglais) dédié, tel qu'un FPGA (« Field-Programmable Gate Array » en anglais) ou un ASIC (« Application-Specific Integrated Circuit » en anglais). D'une manière générale, le système 101 de surveillance de la performance du système de contrôle de fermeture d'une ou plusieurs portes 102 comprend de la circuiterie électronique agencée et configurée pour implémenter les comportements, étapes et algorithmes décrits ici.

La **Fig. 3** illustre schématiquement un exemple de combinaison logique de signaux pour contrôler l'état de fermeture d'un premier type de porte, à savoir une porte passager (« PAX Door »).

On suppose que la porte considérée est équipée de cinq capteurs de proximité fournissant des valeurs de distance (notées PS1', PS2', PS3', PS4' et PS5' et non représentées sur la Fig. 3) à partir desquelles sont obtenues des valeurs logiques (notées PS1, PS2, PS3, PS4 et PS5 et représentées sur la Fig. 3).

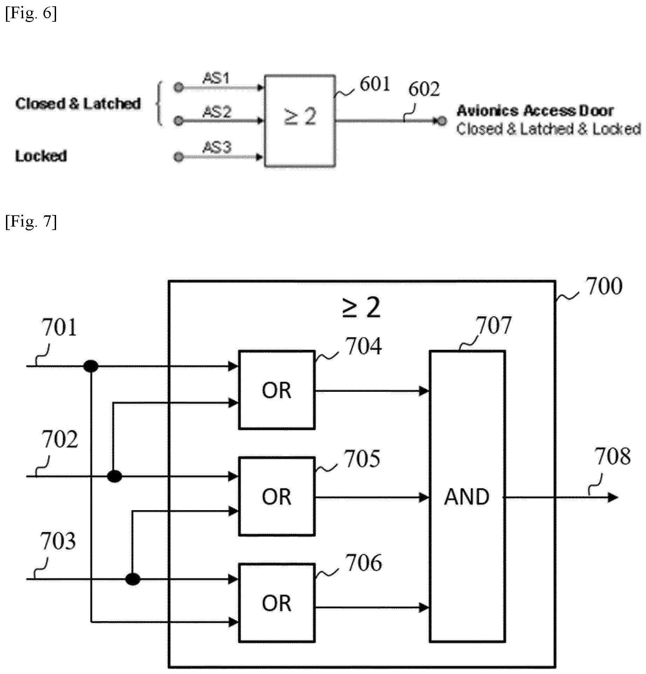

Pour contrôler l'état de fermeture de la porte, un signal de sortie 304 est généré en fonction d'une combinaison logique des valeurs logiques PS1, PS2, PS3, PS4 et PS5 avec des opérateurs logiques (un opérateur « >= 2 » référencé 301 (voir Fig. 7), un opérateur « OU » référencé 302 et un opérateur « ET » référencé 303). Le signal de sortie 304 prend la valeur « 1 » pour indiquer qu'il résulte de la combinaison des signaux logiques PS1 à PS5 que la porte est considérée comme fermée, bloquée et verrouillée (« closed », « latched » et « locked » respectivement en anglais).

Plus précisément, l'opérateur « >= 2 » référencé 301 reçoit en entrée les signaux PS1, PS2 et PS3. L'opérateur « OU » référencé 302 reçoit en entrée les signaux PS4 et PS5. L'opérateur « ET » référencé 303 reçoit en entrée les signaux de sortie de l'opérateur « >= 2 » référencé 301 et de l'opérateur « OU » référencé 302, et génère le signal de sortie 304.

La **Fig. 4** illustre schématiquement un exemple de combinaison logique de signaux pour contrôler l'état de fermeture d'un deuxième type de porte, à savoir une porte avant de soute (« FWD Cargo Compartment Door ») ou une porte arrière de soute (« AFT Cargo Compartment Door »).

On suppose que la porte considérée est équipée de quatre capteurs de proximité fournissant des valeurs de distance (notées CS1', CS2', CS3' et CS4' et non représentées sur la Fig. 4) à partir desquelles sont obtenues des valeurs logiques (notées CS1, CS2, CS3 et CS4 et représentées sur la Fig. 4).

Pour contrôler l'état de fermeture de la porte, un signal de sortie 403 est généré en fonction d'une combinaison logique des valeurs logiques CS1, CS2, CS3 et CS4 avec des opérateurs logiques (un opérateur « ET » référencé 401 et un opérateur « >= 2 » référencé 402 (voir Fig. 7). Le signal de sortie 403 prend la valeur « 1 » pour indiquer qu'il résulte de la combinaison des signaux logiques CS1 à CS4 que la porte est considérée comme fermée, bloquée et verrouillée (« closed », « latched » et « locked » respectivement en anglais).

Plus précisément, l'opérateur « ET » référencé 401 reçoit en entrée les signaux CS1 et CS4. L'opérateur « >= 2 » référencé 402 reçoit en entrée les signaux CS2 et CS3, ainsi que le signal de sortie de l'opérateur « ET » 401, et génère le signal de sortie 403.

La **Fig. 5** illustre schématiquement un exemple de combinaison logique de signaux pour contrôler l'état de fermeture d'un troisième type de port, à savoir une porte de chargement en vrac de la soute (« Bulk Cargo Compartment Door »).

On suppose que la porte considérée est équipée de trois capteurs de proximité fournissant des valeurs de distance (notées BS1', BS2' et BS3' et non représentées sur la Fig. 5) à partir desquelles sont obtenues des valeurs logiques (notées BS1, BS2 et BS3 et représentées sur la Fig. 5).

Pour contrôler l'état de fermeture de la porte, un signal de sortie 502 est généré en fonction d'une combinaison logique des valeurs logiques BS1, BS2 et BS3 avec un opérateur logique « >= 2 » référencé 501 (voir Fig. 7). Le signal de sortie 502 prend la valeur « 1 » pour indiquer qu'il résulte de la combinaison des signaux logiques BS1 à BS3 que la porte est considérée comme fermée, bloquée et verrouillée (« closed », « latched » et « locked » respectivement en anglais).

La **Fig. 6** illustre schématiquement un exemple de combinaison logique de signaux pour contrôler l'état de fermeture d'un quatrième type de porte, à savoir une porte de compartiment avionique (« Avionic Compartment Door »).

On suppose que la porte considérée est équipée de trois capteurs de proximité fournissant des valeurs de distance (notées AS1', AS2' et AS3' et non représentées sur la Fig. 6) à partir desquelles sont obtenues des valeurs logiques (notées AS1, AS2 et AS3 et représentées sur la Fig. 6).

Pour contrôler l'état de fermeture de la porte, un signal de sortie 602 est généré en fonction d'une combinaison logique des valeurs logiques CS1, CS2 et CS3 avec un opérateur logique « >= 2 » référencé 601 (voir Fig. 7). Le signal de sortie 602 prend la valeur « 1 » pour indiquer qu'il résulte de la combinaison des signaux logiques CS1 à CS3 que la porte est considérée comme fermée, bloquée et verrouillée (« closed », « latched » et « locked » respectivement en anglais).

La **Fig. 7** illustre schématiquement le détail d'un bloc opérateur logique « >=2 » référencé ici 700. Il est référencé 301 sur la Fig. 3, 402 sur la Fig. 4, 501 sur la Fig. 5 et 601 sur la Fig. 6.

Le bloc opérateur logique « >=2 » 700 comprend trois opérateurs logiques « OU » référencés 704, 705 et 706 et un opérateur logique « ET » référencé 707.

Plus précisément, l'opérateur « OU » référencé 704 reçoit en entrée les signaux référencés 701 et 702. L'opérateur « OU » référencé 705 reçoit en entrée les signaux référencés 702 et 703. L'opérateur « OU » référencé 706 reçoit en entrée les signaux référencés 703 et 701. L'opérateur « ET » référencé 707 reçoit en entrée les signaux de sortie des trois opérateurs « OU » référencés 704, 705 et 706, et génère le signal de sortie 708. Le signal de sortie 708 prend la valeur « 1 » si au moins deux des trois valeurs logiques en entrée 701, 702 et 703 possèdent la valeur « 1 ».

La **Fig. 8** illustre schématiquement un exemple d'algorithme de surveillance de la performance d'un système de contrôle de fermeture d'une porte d'un aéronef. Il est exécuté par le système de surveillance de la performance d'un système de contrôle de fermeture d'une (ou plusieurs) porte(s), qui est référencé 101 sur la Fig. 1. Dans la suite de la description, on considère la surveillance de la performance d'un système de contrôle de fermeture d'une seule porte, et à titre illustratif on considère uniquement le cas d'une porte passager (« PAX Door »).

Dans une étape 801, le système 101 obtient les valeurs de distance mesurées par la pluralité de capteurs de proximité. Ainsi, dans le cas d'une porte passager équipée de cinq capteurs de proximité, le système 101 obtient les valeurs de distance PS1', PS2', PS3', PS4' et PS5', à partir desquelles sont obtenues des valeurs logiques PS1, PS2, PS3, PS4 et PS5 représentées sur la Fig. 3.

Dans une étape 802, le système 101 effectue une normalisation et un écrêtage des valeurs de distance PS1', PS2', PS3', PS4' et PS5' afin d'obtenir des valeurs de distance normalisées et écrêtées PS1'n, PS2'n, PS3'n, PS4'n et PS5'n.

Dans une implémentation particulière, la normalisation et l'écrêtage des valeurs de distance comprend :

- une affectation de valeur telle que si une valeur de distance, notée « gap » :

   ○ est supérieure ou égale à une première valeur prédéterminée R1, la valeur de distance normalisée et écrêtée, notée « norm_gap » s'écrit : norm_gap = gap ;
   ○ est inférieure à la première valeur de référence R1, la valeur de distance normalisée et écrêtée, notée « norm_gap » s'écrit : norm_gap = gap / G_MAX, avec G_MAX une valeur maximale d'une plage de valeurs de distance prédéterminée (plage de fonctionnement théorique) pour le capteur de proximité ayant fourni la valeur de distance « gap ». On considère ici que G_MIN=0, avec G_MIN la valeur minimale de la plage de valeurs de distance prédéterminée (sinon, dans une variante, on prend : norm_gap = (gap - G_MIN) / (G_MAX - G_MIN) ;

- si après l'affectation la valeur de distance normalisée et écrêtée « norm_gap » est supérieure à 1 et inférieure à la première valeur prédéterminée R1, la valeur de distance normalisée et écrêtée « norm_gap » est modifiée pour prendre une deuxième valeur prédéterminée R2 telle que : 1 < R2 < R1.

Dans un exemple de réalisation, on a :

- R1 = 6, ce qui correspond à un exemple de valeur « hors de portée » (« out of range » en anglais) retournée par un capteur de proximité qui n'a pas été capable de mesurer la distance par rapport à son élément cible car l'élément cible est éloigné de plus de 6 mm ; et
- R2 = 1,2, ce qui permet de réaliser un saut disruptif pour renforcer les distances (gaps) qui ont pu être mesurées mais qui sont supérieures à G_MAX.

Dans une étape 803, le système 101 calcule une valeur de l'indicateur DDI mentionné plus haut (indicateur de performance du système de contrôle de fermeture de la porte), en fonction d'une combinaison de fonctions mathématiques qui utilise les valeurs de distance normalisées et écrêtées comme valeurs d'entrée et qui est une transposition de la combinaison logique dans laquelle chaque type d'opérateur logique de la combinaison logique est remplacé par une fonction mathématique particulière.

Dans une implémentation particulière, la transposition de la combinaison logique est telle que :

- l'opérateur logique « ET », appliqué à deux valeurs logiques notées A et B et fournies par deux capteurs donnés, est remplacé par la fonction mathématique MAX(A',B'), avec A' et B' des valeurs de distance mesurées par les deux capteurs donnés (puis normalisées et écrêtées). Le choix ici de la fonction MAX permet de traduire dans l'indicateur DDI le fait qu'il suffit qu'un des deux capteurs donnés soit dégradé pour que la valeur logique (A ou B) qu'il fournit soit égale à « 0 » et provoque un signal de sortie de la porte « ET » égal à « 0 » (équivalent à une valeur logique « FAUX ») ; et

- l'opérateur logique « OU », appliqué à deux valeurs logiques notées A et B et fournies par deux capteurs donnés, est remplacé par une fonction mathématique T(A',B') avec A' et B' des valeurs de distance mesurées par les deux capteurs donnés (puis normalisées et écrêtées). Dans un mode de réalisation, cette fonction T(A',B') est : T(A',B') = K.MOYENNE(A',B'), avec K >= 1. Dans un autre mode de réalisation, cette fonction T(A',B') est : T(A',B') = K.MIN(A',B'), avec K>=1. Le choix ici de la fonction T permet de traduire dans l'indicateur DDI le fait que les deux capteurs donnés doivent être dégradés pour que les valeurs logiques (A et B) qu'ils fournissent soient égales à « 0 » et provoquent un signal de sortie de la porte « OU » égal à « 0 » (équivalent à une valeur logique « FAUX »)

Dans le cas d'une porte passager (voir la Fig. 3 pour la combinaison logique (de valeurs logiques) qui est utilisée pour contrôler l'état de fermeture de la porte), l'indicateur DDI est calculé comme suit : DDI = MAX (U,V)

avec U = MAX [T(PS1'n, PS2'n), T(PS2'n, PS3'n), T(PS1'n, PS3'n)]
et V = T (PS4'n, PS5'n).

On notera que le paramètre U découle de la transposition de la combinaison logique que constitue l'opérateur logique « <+ 2 » référencé 301 sur la Fig. 3 (cette combinaison logique étant elle-même détaillée sur la Fig. 7). En d'autres termes, la transposition est telle que l'opérateur logique « >= 2 » fournissant en sortie la valeur « 1 » si au moins deux valeurs logiques en entrée possèdent la valeur « 1 », appliqué à trois valeurs logiques notées A, B et C et fournies par trois capteurs donnés, est remplacé par la fonction mathématique suivante : « MAX [T(A',B'), T(B',C'), T(A',C')] », avec A', B' et C' des valeurs de distance mesurées par les trois capteurs donnés.

Le paramètre V est quant à lui une transposition de l'opérateur logique « OU » référencé 302 sur la Fig. 3. La fonction MAX dans l'écriture MAX(U,V) étant quant à elle une transposition de l'opérateur logique « ET » référencé 303 sur la Fig. 3.

Dans le cas d'une porte avant ou arrière de soute (voir la Fig. 4 pour la combinaison logique (de valeurs logiques) qui est utilisée pour contrôler l'état de fermeture de la porte), l'indicateur DDI est calculé comme suit :

DDI = MAX [T(CS2'n, CS3'n), T(CS2'n, MAX(CS1'n,CS4'n)), T(CS3'n, MAX(CS1'n, CS4'n))] avec CS1'n à CS4'n les valeurs de distance normalisées et écrêtées obtenues après normalisation et écrêtage des valeurs de distance CS1' à CS4' (valeurs de distance CS1' à CS4' à partir desquelles sont obtenues les valeurs logiques CS1 à CS4 représentées sur la Fig. 4).

Dans le cas d'une porte de chargement en vrac de la soute (voir la Fig. 5 pour la combinaison logique (de valeurs logiques) qui est utilisée pour contrôler l'état de fermeture de la porte), l'indicateur DDI est calculé comme suit :

$$DDI = MAX [T(BS1'n, BS2'n), T(BS2'n, BS3'n), T(BS1'n, BS3'n)]$$

avec BS1'n à BS3'n les valeurs de distance normalisées et écrêtées obtenues après normalisation et écrêtage des valeurs de distance BS1' à BS3' (valeurs de distance BS1' à BS3' à partir desquelles sont obtenues les valeurs logiques BS1 à BS3 représentées sur la Fig. 5).

Dans le cas d'une porte de compartiment avionique (voir la Fig. 6 pour la combinaison logique (de valeurs logiques) qui est utilisée pour contrôler l'état de fermeture de la porte), l'indicateur DDI est calculé comme suit :

$$DDI = MAX [T(AS1'n, AS2'n), T(AS2'n, AS3'n), T(AS1'n, AS3'n)]$$

avec AS1'n à AS3'n les valeurs de distance normalisées et écrêtées obtenues après normalisation et écrêtage des valeurs de distance AS1' à AS3' (valeurs de distance AS1' à AS3' à partir desquelles sont obtenues les valeurs logiques AS1 à AS3 représentées sur la Fig. 6).

Dans un exemple de réalisation, on prend K = 90 dans la définition de la fonction T. Ceci permet, quand par ailleurs on prend R1 = 6 et R2 = 1,2 pour la normalisation et l'écrêtage, d'avoir un indicateur DDI qui évolue dans la plage [0, 99[, tant que le couple de capteurs de proximité le plus dégradé (parmi les couples apparaissant comme attributs de la fonction T dans l'écriture mathématique de l'indicateur DDI ; écriture donnée ci-dessus) ne comprend pas deux capteurs de proximité pour chacun desquels la distance mesurée est supérieure à G_MAX. En d'autres termes, on ne considère pas le cas DDI > 99 qui correspond à une situation où il faut effectuer une réparation immédiate plutôt qu'une maintenance préventive.

On notera que c'est la valeur de T(A',B') calculée pour le couple de capteurs de proximité le plus dégradé (au sens défini ci-dessus), qui va donner la valeur de l'indicateur DDI. Ainsi, dans l'implémentation particulière où T(A',B') = 90.MOYENNE(A',B'), on peut distinguer les situations suivantes (en nommant $x_N$ et $y_N$ les valeurs de distance normalisées et écrêtées selon la définition donnée plus haut, avec R1 = 6 et R2 = 1,2) :

- pour $x_N$ et $y_N \in [0, 1[$, on a : DDI $\in [0, 90[$
- pour $x_N = y_N = 1$, on a : DDI = 90
- pour $x_N > 1$ et $y_N \in [0,8, 1[$, on a : DDI $\in [90, 99[$
- pour $x_N > 1$ et $y_N = 1$, on a : DDI = 99

On revient à la description de la figure 8.

Dans une étape 804, le système 101 détecte si une première condition de déclenchement d'alerte, fonction de la valeur de l'indicateur DDI, est vérifiée, et si c'est le cas passe à l'étape 805 sinon passe à l'étape 806. Dans le contexte de l'implémentation particulière précitée (indicateur DDI qui évolue dans la plage [0, 99[), la première condition de déclenchement d'alerte est par exemple : la valeur de l'indicateur DDI est égale à une première valeur prédéterminée V1 (par exemple V1=99) pendant une première fenêtre temporelle (par exemple une journée).

Dans l'étape 805, le système 101 déclenche une première alerte indiquant un premier niveau de gravité (« alerte rouge »).

Dans l'étape 806, le système 101 détecte si une deuxième condition de déclenchement d'alerte, fonction de la valeur de l'indicateur DDI, est vérifiée, et si c'est le cas passe à l'étape 807 sinon revient à l'étape 801. Dans le contexte de l'implémentation particulière précitée (indicateur DDI qui évolue dans la plage [0, 99[), la deuxième condition de déclenchement d'alerte est par exemple : la valeur de l'indicateur DDI est comprise dans une plage de valeurs [V2, V1[ pendant une deuxième fenêtre temporelle (par exemple une semaine), avec V2 une deuxième valeur prédéterminée inférieure à la première valeur V1 (par exemple V2=90).

Dans l'étape 807, le système 101 déclenche une deuxième alerte indiquant un deuxième niveau de gravité (« alerte orange ») inférieur au premier niveau de gravité.

Ainsi, il est possible de déclencher différents types d'alerte (deux dans le mode de réalisation présenté ci-dessus, mais dans des variantes cela peut être plus de deux) en fonction de la valeur de l'indicateur DDI et donc du niveau de gravité (niveau de risque). Chaque type d'alerte peut être associé à des opérations de maintenance préventive qui sont adaptées au niveau de risque de l'alerte considérée.

**Revendications**

1. Procédé de surveillance d'une performance d'un système de contrôle de fermeture d'une porte (102) d'un aéronef (100), la porte étant équipée d'une pluralité de capteurs de proximité mesurant des valeurs de distance à partir desquelles sont obtenues des valeurs logiques utilisées pour contrôler l'état de fermeture de la porte en fonction d'une combinaison logique des valeurs logiques avec des opérateurs logiques, le procédé étant implémenté par un système de surveillance de la performance du système de contrôle de fermeture de la porte (101) sous forme de circuiterie électronique, le procédé comportant :

   - obtenir (801) les valeurs de distance mesurées par la pluralité de capteurs de proximité ;
   - calculer (803) une valeur d'un indicateur de performance du système de contrôle de fermeture de la porte, en fonction d'une combinaison de fonctions mathématiques qui utilise les valeurs de distance comme valeurs d'entrée et qui est une transposition de la combinaison logique dans laquelle chaque type d'opérateur logique de la combinaison logique est remplacé par une fonction mathématique particulière ; et
   - déclencher (805, 807) une alerte si une condition de déclenchement (804, 806), fonction de la valeur de l'indicateur de performance du système de contrôle de fermeture de la porte, est vérifiée.

2. Procédé de surveillance selon la revendication 1, dans lequel la transposition de la combinaison logique est telle que :

   - l'opérateur logique ET, appliqué à deux valeurs logiques notées A et B et fournies par deux capteurs donnés, est remplacé par la fonction mathématique MAX(A',B'), avec A' et B' des valeurs de distance mesurées par les deux capteurs donnés ; et
   - l'opérateur logique OU, appliqué à deux valeurs logiques notées A et B et fournies par deux capteurs donnés, est remplacé par une fonction mathématique T(A',B') avec A' et B' des valeurs de distance mesurées par les deux capteurs donnés, appartenant au groupe comprenant :
- T(A',B') = K.MOYENNE(A',B'), avec K >= 1 ; et
- T(A',B') = K.MIN(A',B'), avec K>=1.

**3.** Procédé de surveillance selon la revendication 2, dans lequel la transposition de la combinaison logique est telle qu'un opérateur logique « >= 2 » fournissant en sortie la valeur « 1 » si au moins deux valeurs logiques en entrée possèdent la valeur « 1 », appliqué à trois valeurs logiques notées A, B et C et fournies par trois capteurs donnés, est remplacé par la fonction mathématique suivante : « MAX [T(A',B'), T(B',C'), T(A',C')] », avec A', B' et C' des valeurs de distance mesurées par les trois capteurs donnés.

**4.** Procédé de surveillance selon l'une quelconque des revendications 1 à 3, comprenant une normalisation et un écrêtage (802) des valeurs de distance afin d'obtenir des valeurs de distance normalisées et écrêtées, et dans lequel le calcul (803) d'une valeur de l'indicateur de performance du système de contrôle de fermeture de la porte est effectué avec les valeurs de distance normalisées et écrêtées.

**5.** Procédé de surveillance selon la revendication 4 dans lequel la normalisation et l'écrêtage (802) des valeurs de distance comprend :

- une affectation de valeur telle que si une valeur de distance, notée « gap » :

* est supérieure ou égale à une première valeur prédéterminée R1, la valeur de distance normalisée et écrêtée, notée « norm_gap » s'écrit : norm_gap = gap ;
* est inférieure à la première valeur de référence R1, la valeur de distance normalisée et écrêtée, notée « norm_gap » s'écrit : norm_gap = gap / G_MAX, avec G_MAX une valeur maximale d'une plage de valeurs de distance prédéterminée pour le capteur de proximité ayant fourni la valeur de distance « gap » ;

- si après l'affectation la valeur de distance normalisée et écrêtée « norm_gap » est supérieure à 1 et inférieure à la première valeur prédéterminée R1, la valeur de distance normalisée et écrêtée « norm_gap » est modifiée pour prendre une deuxième valeur prédéterminée R2 telle que : 1 < R2 < R1.

**6.** Procédé de surveillance selon l'une quelconque des revendications 1 à 5, dans lequel l'alerte appartient au groupe comprenant :

- une première alerte (805), indiquant un premier niveau de gravité, si la valeur de l'indicateur de performance du système de contrôle de fermeture de la porte est égale à une première valeur prédéterminée V1 pendant une première fenêtre temporelle ; et
- une deuxième alerte (807), indiquant un deuxième niveau de gravité inférieur au premier niveau de gravité, si la valeur de l'indicateur de performance du système de contrôle de fermeture de la porte est comprise dans une plage de valeurs [V2, V1[ pendant une deuxième fenêtre temporelle, avec V2 une deuxième valeur prédéterminée inférieure à la première valeur V1.

**7.** Produit programme d'ordinateur, comportant des instructions entraînant l'exécution, par un processeur (201), du procédé selon l'une quelconque des revendications 1 à 6, lorsque lesdites instructions sont exécutées par le processeur.

**8.** Support de stockage (203), stockant un programme d'ordinateur comportant des instructions entraînant l'exécution, par un processeur (201), du procédé selon l'une quelconque des revendications 1 à 6, lorsque lesdites instructions sont lues et exécutées par le processeur.

**9.** Système de surveillance (101) d'une performance d'un système de contrôle de fermeture d'une porte (102) d'un aéronef (100), la porte étant équipée d'une pluralité de capteurs de proximité mesurant des valeurs de distance à partir desquelles sont obtenues des valeurs logiques utilisées pour contrôler l'état de fermeture de la porte en fonction d'une combinaison logique des valeurs logiques avec des opérateurs logiques, le système de surveillance de la performance du système de contrôle de fermeture de la porte (101) comprenant une circuiterie électronique configurée pour implémenter :

- obtenir (801) les valeurs de distance mesurées par la pluralité de capteurs de proximité ;

- calculer (803) une valeur d'un indicateur de performance du système de contrôle de fermeture de la porte, en fonction d'une combinaison de fonctions mathématiques qui utilise les valeurs de distance comme valeurs d'entrée et qui est une transposition de la combinaison logique dans laquelle chaque type d'opérateur logique de la combinaison logique est remplacé par une fonction mathématique particulière ; et

- déclencher (804, 806) une alerte si une condition de déclenchement (803, 805), fonction de la valeur de l'indicateur de performance du système de contrôle de fermeture de la porte, est vérifiée.

10. Aéronef (100) comprenant au moins une porte et le système de surveillance (101) d'une performance d'un système de contrôle de fermeture d'une porte (102) selon la revendication 9.

[Fig. 1]

[Fig. 2]

[Fig. 3]

[Fig. 4]

[Fig. 5]

[Fig. 6]

[Fig. 7]

[Fig. 8]

- Obtention des valeurs de distance mesurées par les capteurs — 801
- Normalisation et écrêtage des valeurs de distance — 802
- Calcul d'une valeur de l'indicateur de performance du système de contrôle de fermeture de la porte — 803
- Première condition vérifiée ? — 804
  - Oui → Déclenchement d'une première alerte — 805
  - Non ↓
- Deuxième condition vérifiée ? — 806
  - Oui → Déclenchement d'une deuxième alerte — 807
  - Non

**Europäisches Patentamt**
**European Patent Office**
**Office européen des brevets**

# RAPPORT DE RECHERCHE EUROPEENNE

**Numéro de la demande**

EP 25 17 8730

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 3 770 062 A1 (AIRBUS HELICOPTERS DEUTSCHLAND GMBH [DE]) 27 janvier 2021 (2021-01-27) * alinéas [0001], [0002], [0094] – [0102]; figures 1,6 * ----- | 1-10 | INV.<br>G05B19/05<br>B64C1/14 |
| A | US 2018/265216 A1 (BREIGENZER THOMAS JAMES [US]) 20 septembre 2018 (2018-09-20) * alinéas [0001], [0019], [0020], [0032] – [0034] * ----- | 1-10 | |

**DOMAINES TECHNIQUES RECHERCHES (IPC)**

B64C
B60J
G05B

Le présent rapport a été établi pour toutes les revendications

| Lieu de la recherche | Date d'achèvement de la recherche | Examinateur |
|---|---|---|
| Munich | 18 septembre 2025 | Postemer, Patricia |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-09-2025

| Document brevet cité au rapport de recherche | Date de publication | Membre(s) de la famille de brevet(s) | Date de publication |
|---|---|---|---|
| EP 3770062 A1 | 27-01-2021 | EP 3770062 A1 | 27-01-2021 |
| | | US 2021025212 A1 | 28-01-2021 |
| US 2018265216 A1 | 20-09-2018 | AUCUN | |

EPO FORM P0460

Pour tout renseignement concernant cette annexe : voir Journal Officiel de l'Office européen des brevets, No.12/82